# EUROPEAN PATENT SPECIFICATION

(11) **EP 0 303 499 B1**
(45) Date of publication and mention of the grant of the patent: **24.02.1993**
(21) Application number: 88307482.5
(22) Date of filing: 12.08.1988
(51) Int. Cl.: D07B 1/04

(54) **Preformed yarn useful for forming composite articles and process of producing same**
Vorgefertigtes seilförmiges Material zur Herstellung zusammengesetzter Artikel und Produktionsmethode desselben
Matériau préfabriqué en forme de corde pour la fabrication d'articles composites et méthode pour les produire

(30) Priority: 13.08.1987 JP 202761/87
(43) Date of publication of application: 15.02.1989
(73) Proprietor: ACROSS CO., LTD., Kawaguchi-shi Saitama-ken (JP)
(72) Inventor: Nakagawa, Takao, Kashiwa-shi Chiba-ken (JP); Yamashita, Mihoki 104, Toyotama Daiichi Corporous, Tokyo (JP); Tachibana, Masaharu 4, Daini-Sungarden Narashino, Finabashi-shi Chiba-ken (JP); Namba, Shoko, Funabashi-shi Chiba-ken (JP); Ueda, Takuya, Zushi-shi Kanagawa-ken (JP)
(74) Representative: Allam, Peter Clerk

(56) References cited:
- DE-A- 1 902 850
- US-A- 4 534 919
- US-A- 4 614 678

## Description

This invention relates to a preformed yarn useful for the formation of thermoplastic, shaped, composite articles and to a method of producing same.

Well known composite materials include prepregs formed by coating a tow or a woven cloth of reinforcing fibers with a solution or a low-viscosity melt of a thermosetting resin. Such prepregs, however, are high in adhesiveness and poor in flexibility so that they have problems in handling and post processing. Also known is a tape of a reinforcing fiber-containing thermoplastic resin prepared by extruding a reinforcing fiber tape in which a thermoplastic resin having a high melting point is impregnated. This tape is, however, in the form of a rigid board so that it causes difficulties in the formation of woven clothes, and moreover it cannot be subjected to drape-forming using molds with complex shapes.

In order to overcome these drawbacks, there has been proposed in US-A-4614678 a flexible composite material which comprises a core of a multiplicity of fibers between the interstices of which is provided a fine powder of a thermoplastic material, and a flexible sheath of a thermoplastic resin surrounding the core. The thermoplastic powder has a melting point the same or greater than that of the sheathing material but nonetheless relatively low (in the single working example polyamide 6 with a melting point of 215°-225°C is used), so that when the composite material is molded the thermoplastic powder melts to form the resin matrix embedding the fibers.

While the composite material of US-A-4614678 is suitable for draping through molds with complex shapes in terms of flexibility as compared to known reinforcing fiber-containing thermoplastic resin tapes, it still suffers from the following drawbacks which follow from the fact that a large volume of the thermoplastic powder is required to form the fiber-embedding matrix. Firstly, there is a difficulty in providing a uniform blend ratio of the reinforcing filaments and the thermoplastic resin powder, since the impregnation of the filaments with the powder has to be effected by contact of the filaments with a fluidized layer of the powder in order to incorporate the necessary amount of powder. As a result, the material properties of the resulting molded products obtained with such a composite material are not uniform. Secondly, in order to maintain a stable fluidized state of the resin powder, it is necessary to use thermoplastic resin powder of relatively large size and whose average particle size distribution is within a narrow range. This will increase the cost of production. Thirdly, since there has to be used a thermoplastic resin powder having a relatively large particle size in a relatively large amount, the resulting composite material occupies a relatively large volume which can cause difficulty in handling during the drape-forming of the material, thus offsetting the advantage of its good flexibility.

It is the object of the present invention to provide an improved preformed yarn which is useful for forming shaped articles by draping.

The preformed yarn in accordance with the present invention, like that of US-A-4614678, has a core of a multiplicity of fibers, a fine powder provided in the interstices between the fibers, and a flexible sleeve formed of a thermoplastic resin surrounding the core. Moreover, again as in US-A-4614678, the powder is formed of a material which does not melt at a temperature below the melting point of the thermoplastic resin. However, and in complete contrast to US-A-4614678 where the fine powder is a thermoplastic material present in large volume, and thereby able to form a resin matrix when the yarn is molded, in the preformed yarn of the present invention the fine powder is an inorganic powder whose melting point is not below 450°C in any event, and which does not react with the thermoplastic resin of the sleeve at a temperature up to 450°C or up to the melting point of the thermoplastic resin, whichever is the greater, and the volume of the fine inorganic powder is only from 0.01% to 10% by volume based on the volume of the fibers.

The preformed yarn according to the present invention allows a free and quantitative determination of blending ratios for the fiber and the fine powder, since the fine inorganic powder can have an extremely small particle size and is used in a small amount. As a result, the preformed yarn can be superior in flexibility, uniformity and processability in comparison with the known flexible composite material. Especially when the fibers constituting the core are reinforcing fibers such as carbon fibers, the preformed yarn can give composite articles having excellent mechanical strengths such as tensile strength and bending strength, because the fibers of the yarn are separated from each other by the fine powder interposed between them, thereby to permit the thermoplastic material forming the sleeve to enter the interstices between the fibers during molding of a composite article and because the fibers are not curled at all.

As the preformed yarn according to the present invention is provided with a flexible, thermoplastic resin sleeve around the core, it can prevent air or moisture from permeating into the yarn, thereby avoiding deterioration in the mechanical properties of the molded articles produced therefrom. The preformed yarn does not form fuzz on its surface and permits easy woving or winding.

The preformed yarn in accordance with the present invention is preferably made by a process which comprises the steps of:
continuously passing a bundle of a multiplicity of the fibers through a jet flow of gas containing the fine inorganic powder to loosen the bundle and cause the powder to be deposited on the fibers in the interstices between the loosened fibers;
assembling the powder-carrying fibers to form a core; and
extruding a thermoplastic resin over the core to form a sleeve surrounding the core.

Preferred embodiments of the product and process of the present invention will now be described in more detail with reference to the accompanying drawings, in which:
Fig. 1 is a cross section of a preferred preformed yarn according to the present invention; and
Fig. 2 is a diagrammatic illustration of an apparatus suitable for the preparation of the preformed yarn according to the process of the present invention.

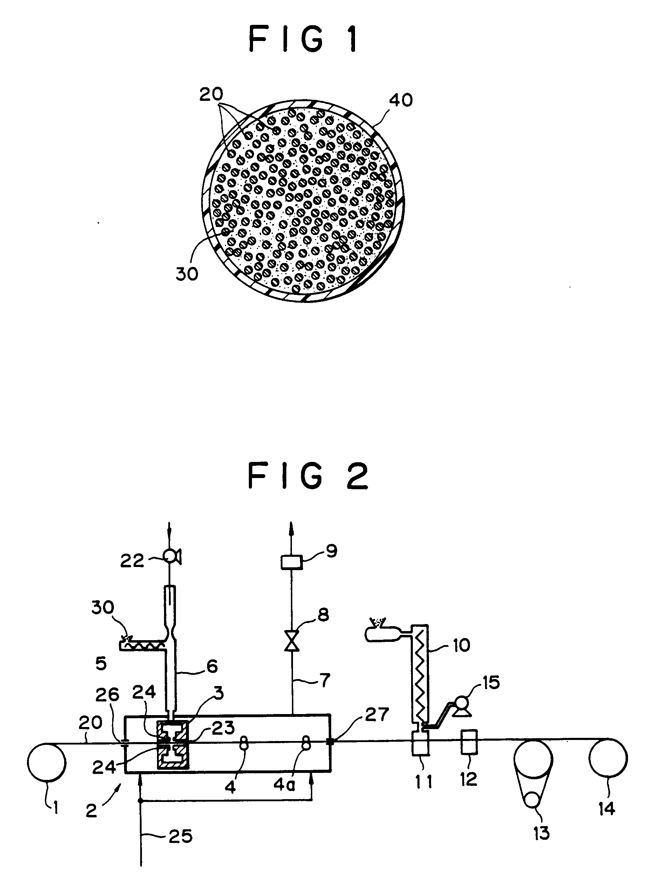

Referring first to Fig. 1, the reference numeral 20 designates fibers, generally continuous fibers, constituting a core. The reinforcing fibers 20 are preferably infusible, reinforcing fibers such as carbon fibers, glass fibers, aramide fibers (aromatic polyamide fibers), boron fibers, ceramic fibers, metal fibers and mixtures thereof. The carbon fibers may be pitch-derived carbon fibers obtained from petroleum or coal tar pitch or PAN-type carbon fibers obtained from acrylic fibers. The glass fibers may be of a strand-type or non-strand-type. The ceramic fibers may be CSi fibers, SiN fibers, BN fibers or alumina fibers. The reinforcing fibers 20 preferably have a filament denier number ranging from about 0.05 to about 600 and filament counts ranging from about 50 to about 300,000, more preferably a filament denier number ranging from about 0.25 to about 16 and filament counts ranging from about 100 to about 48,000.

The amount of the reinforcing fibers is preferably about 30-70 % based on the total volume of the preformed yarn. When the content of the reinforcing fibers is below 30 % by volume, the composite articles obtained therefrom tends to be unsatisfactory in mechanical strength. On the other hand when the amount of the reinforcing fibers exceeds 70 % by volume, the fibers in the composite articles tend to be degraded because of the lack of uniformity.

Referring again to Fig. 1, in the interstices between the fibers 20 is provided finely divided inorganic powder 30. The inorganic powder serves to provide the reinforcing fibers 20 with slippage and to maintain them in a slightly loosened state so that, during the molding stage, the molten thermoplastic resin surrounding the core (the resin of a sleeve which will be described hereinafter) can readily enter into the interstices between the fibers 20, thereby to permit the formation of a uniform matrix of the resin when the resin is resolidified.

It is important that the fine inorganic powder should not melt at a temperature below 450°C nor react with the thermoplastic resin surrounding the core at a temperature of up to 450°C in any event, or at a temperature below the melting point of the thermoplastic resin surrounding the core should that be greater than 450°C. As long as these criteria are met, the material of the inorganic powder 30 is not specifically limited. Examples of suitable materials for the fine inorganic powder include carbon such as graphite, carbon black or activated carbon; a metal or metal compound such as Al₂O₃, SiO₂, Al₂O₃-SiO₂, CaCO₃, Ca₂SiO₄, MoO₂ or MoS₂, quartz or glass.

It is preferred that the fine powder 30 have an average specific surface area diameter of 1/3 (one third) of the diameter of the fiber 20. More particularly, the average specific surface area diameter of the fine powder 30 is preferably 15 µm or less, more preferably 0.01-5 µm, most preferably 0.02-2 µm. The term "average specific surface area diameter" used herein is intended to refer to an average diameter measured by the porosiometry method using the Lea-Nurse device and calculated according to the Konzeny-Carman equation as disclosed in "Powder Engineering (Basic)" (published: Maki Shoten, authors: Kawakita, Koishi and Tanetani), p.81 (1981).

The fine powder 30 is present in an amount of 0.01-10 % by volume, preferably 0.2-5 % by volume of the reinforcing fibers 20. An amount of the powder 30 in excess of 10 % by volume causes reduction of the tensile and bending strength of the molded articles obtained from the preformed yarn. On the other hand, when the amount is below about 0.01 % by volume, the fibers 20 fail to be separated by the powder 30, thereby resulting in lack of uniformity.

As shown in Fig. 1, the core of a multiplicity of the fibers 20 holding therebetween the powder 30 is covered with a flexible sleeve or sheath 40 formed of a thermoplastic resin. The sleeve 40 melts during the formation of molded articles and forms a matrix when resolidified.

The sleeve 40 is preferably formed of a polyamide, a polyester, a polyolefin, a polystyrene, a polyvinylidene fluoride, a polyamideimide, a polyimide, a polyetherimide, a polyethersulfone, a polyether ketone, a polyphenylene sulfide. Examples of the polyolefin include polyethylene and polypropylene. Examples of the polyamide include nylon 66, nylon 6, nylon 12 and nylon 6/66/12 terpolymer. Illustrative of suitable polyesters are polyethylene terephthalate, polybutylene terephthalate, polyethylene-2,6,-naphthalate, polyoxyethoxy benzoate and other aromatic polyesters. The thermoplastc resin sleeve 40 preferably has a melting point of 120-500 °C.

The sleeve 40 preferably has a thickness of 5-1000 µm, more preferably 10-300 µm. It is difficult to prepare a sleeve 40 with a thickness of below 5 µm. A thickness of the sleeve 40 above 1000 µm tends to reduce the flexibility of the preformed yarn. It is preferred that the sleeve 40 be in close contact or shrunk fit with the core so as to minimize the void space between the core and sleeve and within the core. Such a close contact is desirable for minimizing the inclusion of air in the preformed yarn and, therefore, minimizing the occurrence of pores within the final composite articles.

A preformed yarn in which the fibers 20 constituting the core are formed of a thermoplastic resin which may be the same as or different from the material forming the sleeve 40 is also within the scope of the present invention. In this case, the the core of thermoplastic resin fibers 20 and the thermoplastic resin sleeve 40 are melted during a molding step and the melted mass is resolidified to give a moled article formed of the resin and having dispersed therein the fine powder 30. In this case, the fine powder 30 also may serve to impart to the molded article an electric conductivity, an abrasion resistance, an impact strength, a rigidity, an anti-friction property or other desired property. Thus, the fine powder 30 is selected according to the end use of the molded articles. For instance, carbon powder can be used to obtain an electrically conducting molded article.

An embodiment of the process for the fabrication of the above-described preformed yarn will now be described below with reference to Fig. 2. A bundle of continuous fibers 20 wound on a bobbin (not shown) is continuously fed through an unwinding equipment 1 to a powder impregnation device generally designated as 2. The powder impregnation device 2 includes a housing 21, and an air jet nozzle member 3 disposed within the housing 21. An air feed pipe 6 leading from a compressor 22 is connected to the nozzle member 3. A powder feeder 5 is connected to the feed pipe 6 to continuously feed a quantity of fine powder 30 to the compressed air flowing through the feed pipe 6. The nozzle member 3 has a central bore 23 through which the fibers 20 are passed. A plurality of orifices 24 are provided in the nozzle member 3 so that the compressed air carrying fine powder 30 is injected from each orifice 24 toward the fibers 20 running through the bore 23. As a result, the bundle of the fibers 20 is loosened and inflated by the jet blows and at the same time the fine powder 30 is intruded into the bundle and caught between the fibers 20.

The inflated bundle of the fibers 20 holding the powder therebetween is then assembled into a core of a desired diameter by means of assembling rollers 4 and 4a disposed in the housing 21. The powder 30 which has not been caught by the fibers 20 is withdrawn from the housing 21 through a discharge pipe 7 by the action of a suction pump 9 connected to the pipe 7. A recovery means 8 such as a bag filter is provided in the pipe 7 for collecting the powder 30. The fine powder thus collected in the filter 8 may be recycled into the powder feeder 5. Designated as 25 is an air feed conduit for supplying air to the housing 2 and for creating a gas stream in the vicinity of inlet and outlet 26 and 27 of the housing 21 to prevent the powder from escaping through the inlet and outlet 26 and 27.

The core of the fibers 20 into which the fine powder 30 have been incorporated is then covered with a sleeve 40 in a sleeve forming device composed of a cross head 11 and an extruder 10. Designated as 15 is a vacuum pump connected to the cross head 11 for shrinkingly fitting the sleeve over the core and for providing tight bonding between the sleeve and the core.

The resulting preformed yarn is then cooled in a cooling zone 12 and wound on a take-up roller 14. Designated as 13 is a Nelson-type feed roller for drawing the preformed yarn at a constant speed.

If desired, the core provided with the sleeve therearound may be processed, before cooling, by means of a stamping or knot forming device to form a plurality of axially spaced apart, thin, annular, depressed portions on the outer periphery of the sleeve by radially inwardly pressing, with heating, the preformed yarn so as to tighten the sleeve and the core together. The provision of the knots is desirable in the case where the preformed yarn is cut into desired lengths, since escape of the powder from the cut yarn can be minimized.

The preformed yarn according to the present invention may be used as a raw material for the production of molded articles by, for example, filament winding or hot pressing techniques. In the case of filament winding, the preformed yarn is wound on a mandrel or a former and heated under pressure at a temperature sufficient to melt or fuse the thermoplastic resin sleeve and, as the case may be, the thermoplastic fibers. The molten resin is then resolidified and the mandrel or former is removed to give a desired molded article. The mandrel is not removed when it is to constitute a part of the article. In the case of press molding, the preformed yarn is placed in a mold cavity, heated at a temperature higher than the melting point of the resin and then resolidified. The preformed yarn is very suited for the production of composite articles having complex shapes and small radii of curvature, such as structural parts for automobiles, tennis racket frames, hokey sticks, skiing stocks, fishing rods and golf club shafts. The preformed yarn may be formed into woven clothes or mats before molding.

The following examples will further illustrate the present invention.

### Example 1

A preformed yarn was prepared using the apparatus shown in Fig. 2. A bundle of carbon fibers obtained from an acrylonitrile copolymer and wound around a bobbin was mounted on an unwinding equipment 2. The carbon fibers had a filament count of 6000, a density of 1.76 g/cm³, a tensile strength of 360 kg/mm², a modulus of 23.5x10³ kg/mm² and an elongation of 1.5 % . The bundle was continuously drawn by a Nelson type feed roller 13 at a constant speed and was passed through a powder impregnation device 3. Carbon black having a density of 1.83 g/cm³ and an average specific surface area diameter of 0.07 µm was used as the fine powder and was charged in a hopper feeder 5 which was connected to a gas feed pipe 6. During its passage through the impregnation device 2, the bundle of carbon fibers was subjected to a jet flow of air containing the fine powder so that the fiber bundle was loosened and inflated with the fine powder being taken in the interstices between the fibers. The resulting fibers were passed through assembling rolls 4 and 4a to form a core with a predetermined diameter. A controlled tension of about 30 g was applied to the fibers throughout the impregnation step. Excess fine powder in a housing 21 was continuously withdrawn therefrom by a suction device 9 and collected in a bag filter 8.

The core formed of the carbon fibers carrying the carbon black powder was then fed to a sleeve forming cross-head 11 where a thermoplastic resin (polyphenylene sulfide having a density of 1.37 g/cm³, a bending strength of 12.7 kg/mm² and a bending modulus of 350 kg/mm²) was extruded over the core to form a sleeve over the surface of the core. The sleeve had an outer diameter of 2 mm and a thickness of 37 µm. The resulting yarn was cooled with a cooling device 12 and wound by a winding device 14. The extruder 18 had a screw diameter of 25 mm and an extruding velocity of 1.36 liter/hour, and the temperature of the cross head die was set at 281 °C. The drawing velocity was 100 m/min. The volume ratio of the carbon fibers, the sleeve and the carbon black of the preformed yarn was 50.0 : 49.9 : 0.1.

The thus obtained preformed yarn was tightly wound around an aluminum alloy plate, having a width of 50 mm, a length of 200 mm and a thickness of 5 mm, to a thickness of about 3 mm. The resultant plate was inserted into a mold cavity of a press mold apparatus. The mold was heated to 325 °C and maintained at that temperature for 10 minutes. After applying a pressure of 40 Kg/cm², the mold was allowed to be spontaneously cooled to ambient temperature, thereby to obtain a molded product. The resin layer of the molded product had a tensile strength of 151.2 kg/mm² and a bending strength of 176.4 kg/mm². Analysis of the cross section of the molded product revealed that the carbon fibers were uniformly distributed in the resin matrix.

### Example 2

A preformed yarn was prepared using the apparatus shown in Fig. 2 in a manner similar to that of Example 1. As the reinforcing fibers, a bundle of glass fibers having a filament count of 2000, a density of 2.57 g/cm³, a tensile strength of 160 kg/mm², a modulus of 6.4x10³ kg/mm² and an elongation of 2.9 % was used. As a thermoplastic resin for the formation of th sleeve, a high molecular weigh polyethylene having a density of 0.94 g/cm³, a bending strength of 4.1 kg/mm² and a bending modulus of 95 kg/mm²) was used. As the fine poweder, an alumina powder having a density of 3.99 g/cm³ and an average specific surface area diameter of 1.0 µm was used. The sleeve had an outer diameter of 2.5 mm and a thickness of 40 µm. The extruder 18 had a screw diameter of 25 mm and an extruding velocity of 1.87 liter/hour, and the temperature of the cross head die was set at 210 °C. The drawing velocity was 100 m/min. The volume ratio of the glass fibers, the sleeve and the alumina powder of the preformed yarn was 50.0 : 49.9 : 0.1.

The resulting preformed yarn was subjected to press molding in the same manner as that in Example 1 at a molding temperature of 215 °C. The molded product had a tensile strength of 118.8 kg/mm² and a bending strength of 138.6 kg/mm². Analysis of the cross section of the molded product revealed that the glass fibers were uniformly distributed in the resin matrix.

### Comparative Example 1

Example 1 was repeated in the same manner as described except that the carbon black was not used. Thus, a bundle of carbon fibers was directly fed to the sleeve forming step without passing through the powder impregnation device. The extrusion speed of 1.38 liter/hour, the cross head die temperature was 320 °C and the drawing velosity of 100 m/min were used. The sleeve had an outer diameter of 2 mm and a thickness of 37 µm. The volume ratio of the fibers to the sleeve was 50:50. The molded product had a tensile strength of 100.5 kg/mm² and a bending strength of 117.0 kg/mm². An analysis of the cross section of the molded product revealed that the thermoplastic resin was failed to be sufficiently intruded between the fibers.

### Comparative Example 2

Example 1 was repeated in the same manner as described except that the carbon black was replaced by polyphenylene sulfide powder with an average specific surface area diameter of 20 µm and that the impregnation of the powder was effected by passing the fibers, which had been spread and separated, through a fluidized layer of the powder. The extrusion speed of 0.69 liter/hour, the cross head die temperature was 320 °C and the drawing velosity of 100 m/min were used. The sleeve had an outer diameter of 3 mm and a thickness of 12 µm. The volume ratio of fibers: sleeve: powder was 50:25:25. Because the preformed yarn was thick, it was difficult to smoothly wind the yarn around the aluminum alloy plate. The molded product had a tensile strength of 125.2 kg/mm² and a bending strength of 146.7 kg/mm². However, the mechanical strengths varied with test samples indicating the lack of uniformity.

### Example 3

A preformed yarn was prepared using the apparatus shown in Fig. 2 in a manner similar to that of Example 1. As the fibers, a bundle of polyphenylene sulfide fibers having a filament denier number of 9, a filament count of 400, a tensile strength of 7.1 kg/mm² and an elongation of 30 % was used. As a thermoplastic resin for the formation of th sleeve, the same kind of polyphenylene sulfide as used in Example 1 was used. As the fine poweder, a mixed powder composed of an equivalent volume of molybdenum disulfide and graphite was used. The molybdenum disulfide powder had a density of 4.80 g/cm³ and an average specific surface area diameter of 3.2 µm and the graphite had a density of 2.10 g/cm³ and an average specific surface area diameter of 5 µm. The volume ratio of the fibers, the mixed powder and the sleeve of the resultant yarn was 30 : 50 : 20. The preformed yarn thus obtained was cut into short lengths (3 mm) and the cut yarn was used as a raw material for the production of a molded article by injection molding. The molded article exhibited excellent slippage.

## Claims

1. A preformed yarn consisting essentially of:
a core of a multiplicity of fibers (20);
a fine powder (30) provided in the interstices between said fibers; and
a flexible sleeve (40) formed of a thermoplastic resin and surrounding said core,
said fine powder being formed of a material which does not melt at a temperature below the melting point of said thermoplastic resin,
characterized in that:
said fine powder (30) is an inorganic powder whose melting point is not below 450°C in any event, and which does not react with said thermoplastic resin at a temperature up to 450°C or up to the melting point of said thermoplastic resin, whichever is the greater,
and in that the amount of said fine inorganic powder is from 0.01% to 10% by volume based on the volume by said fibers (20)

2. A preformed yarn according to Claim 1, wherein said flexible sleeve (40) has a thickness of about 5 to 1000 µm.

3. A preformed yarn according to Claim 1 or Claim 2, wherein said inorganic powder (30) is carbon powder, metal powder, or a powder of a metal compound.

4. A preformed yarn according to Claim 3, wherein said inorganic powder (30) is graphite powder, carbon black powder, alumina powder, silica powder, calcium carbonate powder, calcium silicate powder, molybdenum dioxide powder, molybdenum disulfide powder, quartz powder, glass powder or hollow glass powder.

5. A preformed yarn according to any preceding claim, wherein said fibers (20) are formed of a material which does not melt at a temperature up to the melting point of said thermoplastic resin.

6. A preformed yarn according to Claim 5, wherein said fibers (20) are reinforcing fibers selected from carbon fibers, glass fibers, aramide fibers, boron fibers, ceramic fibers and metal fibers.

7. A preformed yarn according to any preceding claim, wherein the amount of said inorganic powder (30) is 0.2 to 5% by volume based on the volume of said fibers.

8. A preformed yarn according to any preceding claim, wherein said inorganic powder (30) has an average specific surface area diameter of not greater than one third of the diameter of said fibers.

9. A preformed yarn according to Claim 8, wherein said powder (30) has an average specific surface area diameter of 15 µm or less.

10. A preformed yarn according to any one of Claims 1-4, wherein said fibers (20) are formed of a polymeric material having a melting point not greater than that of said thermoplastic resin.

11. A preformed yarn according to Claim 10, wherein said fibers (20) are formed of a polyamide, a polyester, a polyolefin, a polystyrene, a plyvinylidene fluoride, a polyamideimide, a polyamide, a polyetherimide, a polyethersulfone, a polyether ketone or a polyphenylene sulfide.

12. A process for the manufacture of a preformed yarn as defined in Claim 1, comprising the steps of:
continuously passing a bundle of a multiplicity of said fibers (20) through a jet flow of a gas containing said fine inorganic powder (30) to loosen the bundle and cause powder to be deposited on the fibers in the interstices between the loosened fibers;
assembling said powder-carrying fibers (20) to form a core; and
extruding a thermoplastic resin over said core to form a sleeve (40) surrounding said core.

## Patentansprüche

1. Vorgeformter Faden, im wesentlichen bestehend aus:
- einem Kern aus einer Vielzahl von Fasern (20);
- einem in den Zwischenräumen zwischen den besagten Fasern vorgesehenen Feinpulver (30);
- einer flexiblen, aus einem Thermoplastharz gebildete Hülse (40), die den besagten Kern umgibt,
wobei besagtes Feinpulver aus einem Material gebildet ist, das bei einer Temperatur unterhalb des Schmelzpunkts des besagtes Thermoplastharzes nicht schmilzt,
dadurch gekennzeichnet, daß besagtes Feinpulver (30) ein anorganisches Pulver ist, dessen Schmelzpunkt in keinem Fall unter 450°C liegt und das mit besagtem Thermoplastharz bei einer Temperatur bis 450°C bzw. bis zum Schmelzpunkt des besagten Thermoplastharzes nicht reagiert, je nachdem, welche Temperatur höher ist, und
daß die Menge des besagten anorganischen Feinpulvers von 0,01 bis 10 Vol.-% bezogen auf das Volumen der besagten Fasern (20) ist.

2. Vorgeformter Faden nach Anspruch 1, wobei besagte flexible Hülse (40) eine Dicke von etwa 5 bis 1000 µm hat.

3. Vorgeformter Faden nach Anspruch 1 oder 2, wobei besagtes anorganisches Pulver (30) Kohlenstoffpulver, Metallpulver oder ein Pulver einer Metallverbindung ist.

4. Vorgeformter Faden nach Anspruch 3, wobei besagtes anorganisches Pulver (30) Graphitpulver, Rußpulver, Tonerdepulver, Silikapulver, Kalziumkarbonatpulver, Kalziumsilikatpulver, Molybdändioxidpulver, Molybdändisulfidpulver, Quarzpulver, Glaspulver oder Hohlglaspulver ist.

5. Vorgeformter Faden nach einem der vorhergehenden Ansprüche, wobei besagte Fasern (20) nicht bei einer Temperatur unterhalb des Schmelzpunkts des besagten Thermoplastharzes schmelzen.

6. Vorgeformter Faden nach Anspruch 5, wobei besagte Fasern (20) Verstärkungsfasern sind, die aus Kohlenstoffasern, Glasfasern, Aramidfasern, Borfasern, Keramikfasern und Metallfasern ausgewählt werden.

7. Vorgeformter Faden nach einem der vorhergehenden Ansprüche, wobei die Menge des besagten anorganischen Feinpulvers (30) von 0,2 bis 5 Vol.-% bezogen auf das Volumen der besagten Fasern ist.

8. Vorgeformter Faden nach einem der vorhergehenden Ansprüche, wobei besagtes anorganisches Pulver (30) einen durchschnittlichen spezifischen Oberflächendurchmesser von nicht größer als einem Drittel des Durchmessers der besagten Fasern aufweist.

9. Vorgeformter Faden nach Anspruch 8, wobei besagtes anorganisches Pulver (30) einen durchschnittlichen spezifischen Oberflächendurchmesser von 15 µm oder weniger aufweist.

10. Vorgeformter Faden nach einem der Ansprüche 1 bis 4, wobei besagte Fasern (20) aus einem Polymermaterial mit einem Schmelzpunkt gebildet sind, der nicht größer als der des besagten Thermoplastharzes ist.

11. Vorgeformter Faden nach Anspruch 10, wobei besagte Fasern (20) aus einem Polyamid, einem Polyester, einem Polyolefin, einem Polystyrol, einem Polyvinylenfluorid, einem Polyamidimid, einem Polyamid, einem Polyätherimid, einem Polyäthersulfon, einem Polyätherketon oder einem Polyphenylensulfid gebildet sind.

12. Verfahren zur Herstellung eines vorgeformten Fadens nach Anspruch 1, enthaltend die Schritte:
- kontinuierliches Durchlaufenlassen eines Bündels einer Vielzahl der besagten Fasern (20) durch einen Gasstrahl mit besagtem anorganischen Feinpulver (30), um das Bündel aufzulockern und zu bewirken, daß sich das Pulver in den Zwischenräumen zwischen den aufgelockerten Fasern niederschlägt;
- Zusammenfassen der besagten pulvertragenden Fasern (20) zur Bildung eines Kerns; und
- Extrudieren eines Thermoplastharzes über besagten Kern zur Bildung einer den besagten Kern umgebenden Hülse (40).

## Revendications

1. Un fil préformé comprenant essentiellement :
une âme constituée par une multiplicité de fibres (20);
une poudre fine (30) placée dans les interstices entre les fibres; et
une gaine flexible (40) formée par une résine thermoplastique et entourant le coeur,
la poudre fine étant formée par un matériau qui ne fond pas à une température inférieure au point de fusion de la résine thermoplastique,
caractérisé en ce que :
la poudre fine (30) est une poudre inorganique dont le point de fusion n'est en aucun cas inférieur à 450°C, et qui ne réagit pas avec la résine thermoplastique à une température s'élevant jusqu'à 450°C ou jusqu'au point de fusion de cette résine thermoplastique, la température à prendre en considération étant la plus élevée des deux,
et en ce que la quantité de poudre inorganique fine est comprise entre 0,01% et 10% en volume vis-à-vis du volume des fibres (20).

2. Un fil préformé selon la revendication 1, dans lequel la gaine flexible (40) a une épaisseur d'environ 5 à 1000 µm.

3. Un fil préformé selon la revendication 1 ou la revendication 2, dans lequel la poudre inorganique (30) est une poude de carbone, une poudre de métal ou une poudre d'un composé métallique.

4. Un fil préformé selon la revendication 3, dans lequel la poudre inorganique (30) est une poudre de graphite, une poudre de noir de carbone, une poudre d'alumine, une poudre de silice, une poudre de carbonate de calcium, une poudre de silicate de calcium, une poudre de dioxyde de molybdène, une poudre de disulfure de molybdène, une poudre de quartz, une poudre de verre ou une poudre de verre creux.

5. Un fil préformé selon l'une quelconque des revendications précédentes, dans lequel les fibres (20) sont formées par un matériau qui ne fond pas à une température s'élevant jusqu'au point de fusion de la résine thermoplastique.

6. Un fil préformé selon la revendication 5, dans lequel les fibres (20) sont des fibres de renfort sélectionnées parmi des fibres de carbone, des fibres de verre, des fibres d'aramide, des fibres de bore, des fibres de céramique et des fibres de métal.

7. Un fil préformé selon l'une quelconque des revendications précédentes, dans lequel la quantité de la poudre inorganique (30) est comprise entre 0,2 et 5% en volume, vis-à-vis du volume des fibres.

8. Un fil préformé selon l'une quelconque des revendications précédentes, dans lequel la poudre inorganique (30) a un diamètre moyen correspondant à une aire de surface effective qui n'est pas supérieure au tiers du diamètre des fibres.

9. Un fil préformé selon la revendication 8, dans lequel la poudre (30) a un diamètre moyen correspondant à une aire de surface effective de 15 µm ou plus.

10. Un fil préformé selon l'une quelconque des revendications 1-4, dans lequel les fibres (20) sont formées par un matériau polymère ayant un point de fusion qui n'est pas supérieur à celui de la résine thermoplastique.

11. Un fil préformé selon la revendication 10, dans lequel les fibres (20) sont formées par un polyamide, un polyester, une polyoléfine, un polystyrène, un fluorure de polyvinylidène, un polyamideimide, un polyétherimide, une polyethersulfone, une polyéthercétone ou un sulfure de polyphénylène.

12. Un procédé pour la fabrication d'un fil préformé défini dans la revendication 1, comprenant les étapes suivantes :
on fait passer continuellement un faisceau d'une multiplicité des fibres précitées (20) à travers un jet d'un gaz contenant la poudre inorganique fine (30), pour écarter les fibres du faisceau et pour faire en sorte que la poudre se dépose sur les fibres dans les interstices entre les fibres écartées;
on assemble les fibres (20) recouvertes de poudre pour former une âme; et
on extrude une résine thermoplastique autour de l'âme pour former une gaine (40) entourant l'âme.
